# EUROPEAN PATENT SPECIFICATION

(11) **EP 2 455 176 B1**
(45) Date of publication and mention of the grant of the patent: **05.06.2019**
(21) Application number: 10838378.7
(22) Date of filing: 29.06.2010
(51) Int. Cl.: B23K 9/02, B23K 33/00, B23K 37/04

(54) **WELDING METHOD FOR ABUTTED SECTIONAL MATERIAL**
SCHWEISSVERFAHREN FÜR BENACHBARTE MATERIALABSCHNITTE
PROCÉDÉ DE SOUDAGE POUR MATIÈRE DÉCOUPÉE MISE EN BUTÉE

(30) Priority: 23.04.2010 CN 201010155682
(43) Date of publication of application: 23.05.2012
(73) Proprietor: CRRC Tangshan Co., Ltd., Fengrun Tangshan, Hebei 063035 (CN)
(72) Inventor: ZHOU, Junnian, Tangshan Hebei 063035 (CN); HU, Wenhao, Tangshan Hebei 063035 (CN); LIU, Zhiping, Tangshan Hebei 063035 (CN); WANG, Xiuyi, Tangshan Hebei 063035 (CN)
(74) Representative: Körber, Martin Hans
(86) International application number: PCT/CN2010/074668
(87) International publication number: WO 2011/130945

(56) References cited:
- CN-A- 1 481 966
- CN-A- 101 337 306
- CN-A- 101 337 306
- CN-A- 101 579 700
- JP-A- 9 225 865
- JP-A- 2007 167 924
- KR-A- 20030 006 283
- US-A- 1 831 343
- US-A- 2 808 500

## Description

The present invention relates to welding technology, and particularly to a welding method of butted profile.

### BACKGROUND

At present, double-torch welding robot is widely used in various industries. The double-torch welding robot can weld two welding seam simultaneously such that the double-torch welding robot does welding work with high efficiency. The butted profile which are welded by the double-torch welding robot includes profile with double backing bars arranged at both sides, profile with a single backing bar arranged at one side and profile without backing bars; the profile without backing bars has no backing bar arranged at two sides and is used with assembling the profile with double backing bars and the profile with a single backing bar; in addition, the profiles without backing bars are usually used in pairs which are arranged uniformly at the two sides of a integer of the butted profile.

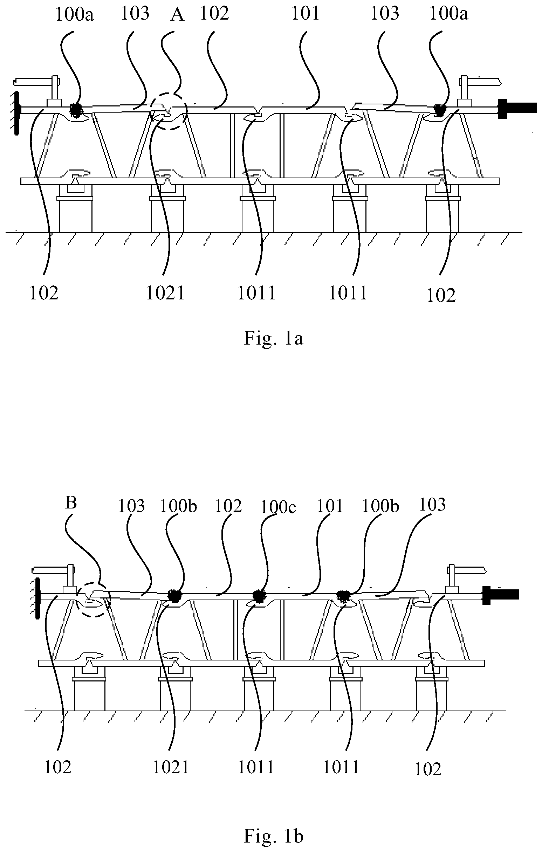

In the prior art, the double-torch welding robot generally welds a profile without backing bars and a profile with double backing bars together or a profile without backing bars and a profile with a single backing bar together in the following way: Referring to Fig. 1a, a profile without backing bars 103 is assembled with a backing bar 1011 of a profile with double backing bars 101 and a backing bar 1021 of a profile with a single backing bar 102 together; in the Fig.1a, the welding process method that an outer symmetrical welding seam 100a is welded at first and then middle welding seams are welded in sequence is adapted. Referring to Fig. 1b , the profile without backing bars 103 is assembled with the backing bar 1011 of a profile with double backing bars 101 and the backing bar 1021 of the profile with a single backing bar 102 together; in the Fig.1b, the welding process method that a middle welding symmetrical seam 100b is weld at first and then outer welding seams are welded in sequence is adapted.

From what is described above, when the profile without backing bars 103 is welded with the profile with double backing bars 101 and the profile with a single backing bar 102 together, welding deformation is generated after the completion of welding one side of the profile without backing bars 103 such that the phenomenon of misalignment appears at the place where the other side of the profile without backing bars 103 corresponds to the profile with a backing bar, such as the A area in Fig. 1a and the B area in Fig. 1b, which causes the welding quality of the butted profile to decline.
CN 101 337 306 A discloses a method for welding a butted profile with the features of the preamble of claim 1.

### SUMMARY

The embodiments of the present invention provides a welding method of butted profile, which is for solving a problem of the defect that misalignment appears in the process of welding butted profile and improving the welding quality of the butted profile.

The present invention provides a welding method of butted profile, according to claim 1.

In the welding method of butted profile provided by the embodiments of the present invention, by welding the two lateral parts of the profile without backing bars with the corresponding profile with double backing bars and/or the profile with a single backing bar at the same time, the two lateral parts of the profile without backing bars and the corresponding profile with double backing bars and/or the profile with a single backing bar can form an integer as well in the welding process; therefore, the welding method of butted profile provided by the present invention effectively avoids the phenomenon of misalignment at one side of the profile without backing bars when the other side of the profile without backing bars is welded and improves the welding quality of the butted profile.

### BRIEF DESCRIPTION OF THE DRAWINGS

In order to illustrate the embodiments of the invention and the technical solution in the prior art more clearly, the following gives a simple introduction of the drawings needed in the illustration of the embodiments of the invention and the technical solution in the prior art; obviously, the drawings in the following description are some embodiments of the invention; those skilled in the art can obtain other drawings according to those drawings without creative work.
Fig. 1a shows a welding sequence of butted profile in the prior art;
Fig. 1b shows another welding sequence of butted profile in the prior art;
Fig. 2 shows a flow chart of a welding method of the butted profile provided by the embodiment of the present invention;
Fig. 3 shows a flow chart of Step 102 in the welding method of the butted profile provided by the embodiment of the present invention;
Fig. 4 shows an assembling diagram of two profile in the middle of a work piece which are a profile with double backing bars and a profile with a single backing bar;
Fig. 5 shows an assembling diagram of an integer of profile;
Fig. 6 shows another assembling diagram of an integer of profile.

### DETAILED DESCRIPTION

In order to make the objects, technical solution and merits of the embodiments of the present invention to be much clearer, a further detailed and complete illustration for the technical solution of the embodiment of the present invention is given below by combining the drawings of the embodiments; obviously, the illustrated embodiments are parts but not all of the embodiments. Based on the embodiments of the invention, other embodiments obtained by those skilled in the art without creative work are within the scope protected by the present invention.

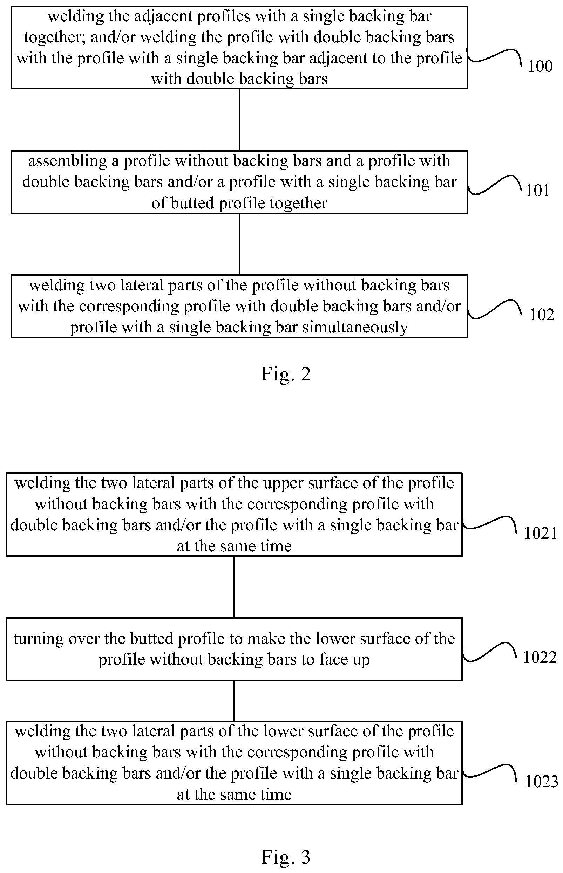

Fig. 2 shows a flow chart of a welding method of butted profile provided by the embodiment of the present invention. Referring to Fig.2, the embodiment provides the welding method of the butted profile which comprises:

Step 101, assembling a profile without backing bars and a profile with double backing bars and/or a profile with a single backing bar of butted profile together.

Specifically, step 101 of the embodiment is for assembling the butted profile to be welded. Thereinto, the butted profile includes a profile without backing bars and further includes a profile with double backing bars or a profile with a single backing bar or further includes both a profile with double backing bars and a profile with a single backing bar. And the profile without backing bars is assembled with the profile with double backing bars or the profile with a single backing bar so as to make the groove of the profile without backing bars to lap and joint on the backing bar of the profile with double backing bars or the profile with a single backing bar and butt the groove of the profile with double backing bars or the profile with a single backing bar as well.

Step 102, welding two lateral parts of the profile without backing bars with the corresponding profile with double backing bars and/or profile with a single backing bar simultaneously.

Specifically, after the butted profile to be welded are assembled together by step 101, step 102 is for welding each piece of profile without backing bars and welding the grooves at two sides of each piece of profile without backing bars with the grooves of the corresponding profile with double backing bars and/or the profile with a single backing bar simultaneously. For example, the two welding torches of a double-torch welding robot are aimed at the grooves at the two sides of the profile without backing bars; and then the double-torch welding robot is activated to weld the grooves at the two sides of the profile without backing bars with the grooves of the corresponding profile with backing bar together. The grooves at two sides of the profile without backing bars are welded simultaneously such that the problem, that after completing welding the groove at one side of the profile without backing bars the phenomenon of misalignment caused by the groove at the other side of the profile without backing bars coming off from the groove of the corresponding profile with backing bar apears, is effectively avoided, and the welding quality of welding the profile without backing bars and the profile with backing bar is improved.

In the welding method of butted profile provided by the embodiments of the present invention, by welding the two lateral parts of the profile without backing bars with the corresponding profile with double backing bars and/or the profile with a single backing bar at the same time, the two lateral parts of the profile without backing bars and the corresponding profile with double backing bars and/or the profile with a single backing bar can form an integer as well in the welding process; therefore, the welding method of butted profile provided by the present invention effectively avoids the phenomenon of misalignment at one side of the profile without backing bars when the other side of the profile without backing bars is welded and improves the welding quality of the butted profile.

Based on the above technical solution, optionally, the welding method of butted profile provided by the embodiments of the present invention comprises a step before step 101, the step is:

Step 100, welding the adjacent profiles with a single backing bar together; and/or welding the profile with double backing bars with the profile with a single backing bar adjacent to the profile with double backing bars.

Specifically, if the butted profile of the embodiment comprise adjacent profiles with a single backing bar or a profile with double backing bars and a profile with a single backing bar adjacent to the profile with double backing bars, welding the adjacent profiles with a single backing bar together at first or welding the profile with double backing bars with the profile with a single backing bar adjacent to the profile with double backing bars at first. That is to say, the welding method of butted profile of the embodiment can assemble twice for welding. When the butted profile comprise adjacent profiles with a single backing bar, lapping and jointing the end part without backing bar of one profile with a single backing bar and the end part with backing bar of another profile with a single backing bar at first; and then welding the adjacent profiles with a single backing bar together by step 100; when the butted profile comprise the profile with double backing bars and the profile with a single backing bar adjacent to the profile with double backing bars, assembling the profile with double backing bars and the profile with a single backing bar adjacent to the profile with double backing bars at first to assemble a backing bar of the profile with double backing bars and the groove the profile with a single backing bar which is adjacent to the profile with double backing bars, and then welding the profile with double backing bars with the profile with a single backing bar adjacent to the profile with double backing bars by step 100.

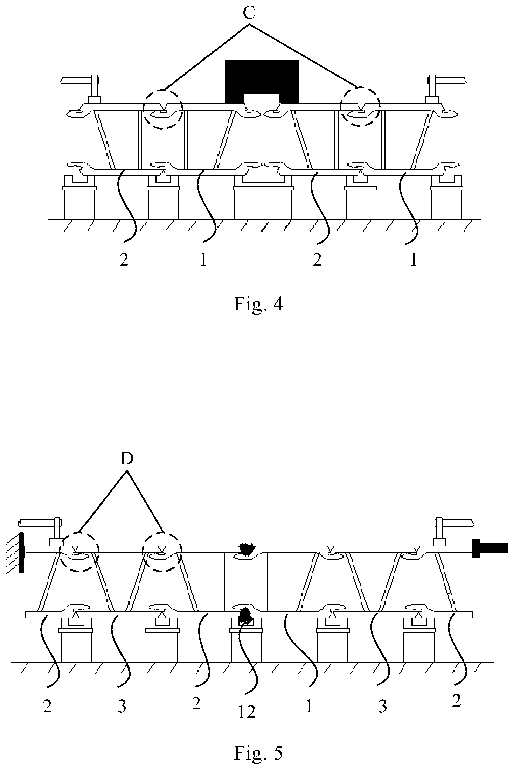

In order to fully utilize advantage of double-torch welding of a double-torch welding robot and improve the welding efficiency, the welding method of butted profile provided by the embodiments of the present invention can weld the adjacent profiles with a single backing bar together or the profile with double backing bars with the profile with a single backing bar adjacent to the profile with double backing bars in pairs. Referring to Fig. 4, the embodiment takes an example of welding the profile with double backing bars with the profile with a single backing bar adjacent to the profile with double backing bars to illustrate the welding method of butted profile. As the assembling relation between two profiles with double backing bars 1 and two profile with a single backing bar 2 shown in Fig. 4, each profile with double backing bars 1 is assembled with the corresponding profile with a single backing bar 2 such that there is an area of two welding seams to be weld, such as area C in Fig. 4. The double-torch welding robot can weld the two welding seams of area C simultaneously so as to improve the welding efficiency effectively.

The butted profile is segmentally assembled by welding the adjacent profiles with a single backing bar at first or welding the profile with double backing bars with the profile with a single backing bar adjacent to the profile with double backing bars at first in the welding method of butted profile of the embodiment. A first time assembling can weld the adjacent profiles with a single backing bar or weld the profile with double backing bars with the profile with a single backing bar adjacent to the profile with double backing bars, which reduces the tooling time of the butted bars to be weld effectively and is convenient for mass production of assembly work line. In addition, twice assembling and twice welding of the butted profile can refine the local deformation trend of the butted profile, which makes the curve of the butted profile toward round and smooth after the completion of the welding of the butted profile and the overall presentation can be an arch.

Based on the technical solution above, optionally, and referring to Fig. 3, step 102 of the embodiment specifically comprises:
Step 1021, welding the two lateral parts of the upper surface of the profile without backing bars with the corresponding profile with double backing bars and/or the profile with a single backing bar at the same time.

Specifically, referring to Fig. 5, a first welding seam 12 is formed at the joint between the profile with double backing bars 1 and the profile with a single backing bar 2 after the processing of step 100. The profile with double backing bars 1 and the profile with a single backing bar 2 which are welded together will butt the groove at one side of the profile without backing bars 3. The embodiment provided by the welding method of butted profile is illustrated by taking an example of butting the groove of the other side of the profile without backing bars 3 with a profile with a single backing bar 2. Welding area D at two sides of the upper surface of the profile without backing bars 3 comprises two welding seams to be welded. Welding molding is performed at the two lateral parts of the upper surface of the profile without backing bars 3 simultaneously through welding the two welding seams to be welded in area D simultaneously by the double-torch welding robot. Thereinto, according to the sequence of the profile without backing bars 3 arranged in the butted profile, the two lateral parts of the upper surface of the profile without backing bars 3 are welded successively with the corresponding profile with double backing bars 1 and/or the profile with a single backing bar 2 at the same time.

Step 1022, turning over the butted profile to make the lower surface of the profile without backing bars to face up.

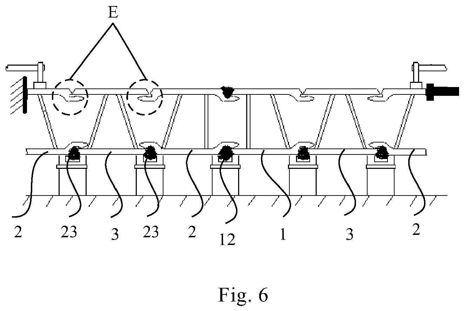

Specifically, after welding the grooves of welding the two lateral parts of the upper surface of the profile without backing bars with the grooves of the corresponding profile with double backing bars and/or the profile with a single backing bar at the same time through step 1021, it needs to weld the grooves at the two lateral parts of the lower surface of the profile without backing bars. Referring to Fig. 6, after the upper surface of the profile without backing bars 3 is processed by step 1021, a second weld seam 23 is formed at the two lateral parts of the upper surface of the profile without backing bars 3. In order to weld the lower surface of the profile without backing bars 3, the integer of profile is turned over in step 1022 such that the lower surface of the profile without backing bars 3 faces up for the convenience of welding the two lateral parts of the lower surface of the profile without backing bars 3.

Step 1023, welding the two lateral parts of the lower surface of the profile without backing bars with the corresponding profile with double backing bars and/or the profile with a single backing bar at the same time.

Specifically, referring to Fig. 6, the lower surface of the profile without backing bars faces up after step 1022 and welding molding is performed at the two lateral parts of the lower surface of the profile without backing bars 3 simultaneously through welding the two welding seams to be welded in area E simultaneously by the double-torch welding robot. Thereinto, the welding is started from the end which is far away from the profile without backing bars which is finally welded and the two lateral parts of the lower surface of the profile without backing bars 3 is welded successively with the corresponding profile with double backing bars 1 and/or the profile with a single backing bar 2 at the same time. Since welding residual stress remains at the just welded welding seam on the upper surface of the profile without backing bars 3, the residual stress will be released and transferred into deformation. In order to prevent the deformation from being accumulated much, the welding is started from the end far from the groove which is finally welded of the upper surface at the time of welding the lower surface of the profile without backing bars 3 such that it is efficiently to control the deformation of the integer formed after welding the work piece and helpful for improving the welding quality.

Finally, it should be understood that the above embodiments are only used to explain, but not to limit the technical solution of the present invention. In despite of the detailed description of the present invention with referring to above preferred embodiments, it should be understood that various modifications, changes or equivalent replacements can be made by those skilled in the art without departing from the scope of the present invention as defined in the claims of the present invention.

## Claims

1. A welding method of butted profile, comprising:
assembling a profile without backing bars (3) with a first profile with a backing bar and a second profile with a backing bar of a plurality of profiles with a backing bar together, wherein the plurality of profiles with a backing bar comprise a profile with a single backing bar (2) and a profile with double backing bars (1), and wherein the assembling a profile without backing bars (3) with a first profile with a backing bar and a second profile with a backing bar of a plurality of profiles with a backing bar together comprises lapping and jointing one end of the profile without backing bars (3) with an end with backing bar of the first profile with a backing bar, and lapping and jointing the other end of the profile without backing bars (3) with an end with backing bar of the second profile with a backing bar;
**characterized in that**, the method further comprises:
welding two lateral parts of the profile without backing bars (3) with the corresponding first profile with a backing bar and the second profile with a backing bar simultaneously;
before the assembling a profile without backing bars (3) with a first profile with a backing bar and a second profile with a backing bar of a plurality of profiles with a backing bar together, further comprising:
welding adjacent profiles with a single backing bar (2) together; if the butted profile comprises the adjacent profiles with a single backing bar (2); and/or welding a profile with double backing bars (1) with a profile with a single backing bar (2) adjacent to the profile with double backing bars (1) together, if the butted profile comprises the profile with double backing bars (1) and the profile with a single backing bar (2) adjacent to the profile with double backing bars (1).

2. The welding method of butted profile according to claim 1, further comprising:
assembling the adjacent profiles with a single backing bar (2) together before welding the adjacent profiles with a single backing bar (2) together; and
assembling the profile with double backing bars (1) and the profile with a single backing bar (2) adjacent to the profile with double backing bars (1) together before welding the profile with double backing bars (1) with the profile with a single backing bar (2) adjacent to the profile with double backing bars (1).

3. The welding method of butted profile according to any one of claims 1 to 2, wherein welding two lateral parts of the profile without backing bars (3) with the corresponding first profile with a backing bar and the second profile with a backing bar simultaneously specifically comprises:
welding two lateral parts of a upper surface of the profile without backing bars (3) with the corresponding first profile with a backing bar and the second profile with a backing bar simultaneously;
turning over the butted profile to make a lower surface of the profile without backing bars (1) to face up; and
welding two lateral parts of the lower surface of the profile without backing bars (3) with the corresponding first profile with a backing bar and the second profile with a backing bar simultaneously.

4. The welding method of butted profile according to claim 3, wherein
welding the two lateral parts of the upper surface of the profile without backing bars (3) with the corresponding first profile with a backing bar and the second profile with a backing bar simultaneously specifically comprises:
according to the sequence of the profiles without backing bars (3) arranged in the butted profile, welding successively the two lateral parts of the upper surface of the profile without backing bars (3) with the corresponding first profile with a backing bar and the second profile with a backing bar simultaneously; and
welding the two lateral parts of the lower surface of the profile without backing bars (3) with the corresponding first profile with a backing bar and the second profile with a single backing bar simultaneously specifically comprises;
by starting welding from the end far from the last welded profile without backing bars (3), welding successively the two lateral parts of the lower surface of the profile without backing bars (3) with the corresponding first profile with a backing bar and the second profile with a backing bar simultaneously.

## Patentansprüche

1. Schweißverfahren für ein Stoßprofil, aufweisend die folgenden Schritte:
Zusammenfügen eines Profils ohne Stützstangen (3) aus einem ersten Profil mit Stützstange mit einem zweiten Profil mit Stützstange aus einer Vielzahl von Profilen mit Stützstange, wobei die Vielzahl von Profilen mit Stützstange Profile mit einer einzigen Stützstange (2) und Profile mit zwei Stützstangen (1) umfasst, und wobei das Zusammenfügen eines Profils ohne Stützstangen (3) aus einem ersten Profil mit Stützstange mit einem zweiten Profil mit Stützstange aus einer Vielzahl von Profilen mit Stützstange das Läppen und Verbinden eines Endes des Profils ohne Stützstangen (3) mit einem Ende des ersten Profils mit Stützstange und das Läppen und Verbinden des anderen Endes des Profils ohne Stützstangen (3) mit einem Ende des zweiten Profils mit Stützstange umfasst;
**dadurch gekennzeichnet, dass**
das Verfahren ferner umfasst:
gleichzeitiges Verschweißen zweier Seitenteile des Profils ohne Stützstangen (3) mit dem entsprechenden ersten Profil mit Stützstange und mit dem zweiten Profil mit Stützstange;
vor dem Zusammenfügen eines Profils ohne Stützstangen (3) mit einem ersten Profil mit Stützstange und einem zweiten Profil mit Stützstange aus einer Vielzahl von Profilen mit einer Stützstange, ferner umfassend:
Verschweißen benachbarter Profile mit nur einer Stützstange (2); wenn das Stoßprofil die benachbarten Profile mit einer einzigen Stützstange (2) umfasst, und/oder Verschweißen eines Profils mit doppelten Stützstangen (1) mit einem Profil mit einer einzigen Stützstange (2) an das Profil mit doppelten Stützstangen (1), wenn das Stoßprofil das Profil mit doppelten Stützstangen (1) und das Profil mit einer einzigen Stützstange (2) neben dem Profil mit doppelten Stützstangen (1) umfasst.

2. Schweißverfahren zur Herstellung eines Stoßprofils nach Anspruch 1, ferner aufweisend:
Zusammenfügen der benachbarten Profile mit einer einzigen Stützstange (2), bevor die benachbarten Profile mit einer einzigen Stützstange (2) zusammengeschweißt werden; und
Zusammenfügen des Profils mit doppelten Stützstangen (1) und des zu dem Profil mit doppelten Stützstangen (1) benachbarten Profils mit einer einzelnen Stützstange (2) bevor das Profil mit doppelten Stützstangen (1) mit dem zu dem Profil mit doppelten Stützstangen (1) benachbarten Profil mit einer einzelnen Stützstange (2) verschweißt wird.

3. Schweißverfahren zur Herstellung eines Stoßprofils nach einem der Ansprüche 1 bis 2, wobei das gleichzeitige Verschweißen zweier Seitenteile des Profils ohne Stützstangen (3) mit dem entsprechenden ersten Profil mit Stützstange und dem zweiten Profil mit Stützstange im Einzelnen umfasst:
gleichzeitiges Verschweißen zweier Seitenteile einer Oberseite des Profils ohne Stützstangen (3) mit dem entsprechenden ersten Profil mit Stützstange und dem zweiten Profil mit Stützstange;
Wenden des Stoßprofils, um eine Unterseite des Profils ohne Stützstangen (1) so zu gestalten, dass diese nach oben zeigt; und
gleichzeitiges Verschweißen zweier Seitenteile der Unterseite des Profils ohne Stützstangen (3) mit dem entsprechenden ersten Profil mit Stützstange und dem zweiten Profil mit Stützstange.

4. Schweißverfahren zur Herstellung eines Stoßprofils nach Anspruch 3, wobei das gleichzeitige Verschweißen der beiden Seitenteile der Oberseite des Profils ohne Stützstangen (3) mit dem entsprechenden ersten Profil mit einer Stützstange und dem zweiten Profil mit einer Stützstange im Einzelnen umfasst:
gleichzeitiges sukzessives Verschweißen der beiden Seitenteile der Oberseite des Profils ohne Stützstangen (3) mit dem entsprechenden ersten Profil mit Stützstange und dem zweiten Profil mit Stützstange gemäß der Reihenfolge der im Stoßprofil angeordneten Stützstangen (3), und
gleichzeitiges Verschweißen der beiden Seitenteile der Unterseite des Profils ohne Stützstangen (3) mit dem entsprechenden ersten Profil mit Stützstange und dem zweiten Profil mit einer einzigen Stützstange, im Einzelnen umfassend;
zu Beginn des Schweißens vom abgewandten Ende des zuletzt geschweißten Profils ohne Stützstangen (3), gleichzeitiges sukzessives Verschweißen der beiden Seitenteile der Unterseite des Profils ohne Stützstangen (3) mit dem entsprechenden ersten Profil mit einer Stützstange und dem zweiten Profil mit einer Stützstange.

## Revendications

1. Procédé de soudage de profilé abouté, comprenant :
l'assemblage d'un profilé sans barres de renfort (3) avec un premier profilé avec une barre de renfort et un deuxième profilé avec une barre de renfort d'une pluralité de profilés avec une barre de renfort, la pluralité de profilés avec une barre de renfort comprenant un profilé avec une seule barre de renfort (2) et un profilé avec deux barres de renfort (1), et l'assemblage d'un profilé sans barres de renfort (3) avec un premier profilé avec une barre de renfort et un deuxième profilé avec une barre de renfort d'une pluralité de profilés avec une barre de renfort comprend le recouvrement et la jonction d'une extrémité du profilé sans barres de renfort (3) avec une extrémité avec barre de renfort du premier profilé avec une barre de renfort, et le recouvrement et la jonction de l'autre extrémité du profilé sans barres de renfort (3) avec une extrémité avec barre de renfort du deuxième profilé avec une barre de renfort ;
**caractérisé en ce que** le procédé comprend en outre :
le soudage de deux parties latérales du profilé sans barres de renfort (3) simultanément avec le premier profilé avec une barre de renfort et le deuxième profilé avec une barre de renfort correspondants ;
avant l'assemblage d'un profilé sans barres de renfort (3) avec un premier profilé avec une barre de renfort et un deuxième profilé avec une barre de renfort d'une pluralité de profilés avec une barre de renfort, comprenant en outre :
le soudage de profilés adjacents avec une seule barre de renfort (2), si le profilé abouté comprend les profilés adjacents avec une seule barre de renfort (2) ; et/ou le soudage d'un profilé avec deux barres de renfort (1) avec un profilé avec une seule barre de renfort (2) adjacent au profilé avec deux barres de renfort (1), si le profilé abouté comprend le profilé avec deux barres de renfort (1) et le profilé avec une seule barre de renfort (2) adjacent au profilé avec deux barres de renfort (1).

2. Procédé de soudage de profilé abouté selon la revendication 1, comprenant en outre :
l'assemblage des profilés adjacents avec une seule barre de renfort (2) avant le soudage des profilés adjacents avec une seule barre de renfort (2) ; et
l'assemblage du profilé avec deux barres de renfort (1) et du profilé avec une seule barre de renfort (2) adjacent au profilé avec deux barres de renfort (1) avant le soudage du profilé avec deux barres de renfort (1) avec le profilé avec une seule barre de renfort (2) adjacent au profilé avec deux barres de renfort (1).

3. Procédé de soudage de profilé abouté selon l'une quelconque des revendications 1 à 2, dans lequel le soudage de deux parties latérales du profilé sans barres de renfort (3) simultanément avec le premier profilé avec une barre de renfort et le deuxième profilé avec une barre de renfort correspondants comprend spécifiquement :
le soudage de deux parties latérales d'une surface supérieure du profilé sans barres de renfort (3) simultanément avec le premier profilé avec une barre de renfort et le deuxième profilé avec une barre de renfort correspondants ;
le retournement du profilé abouté pour qu'une surface inférieure du profilé sans barres de renfort (1) soit tournée vers le haut ; et
le soudage de deux parties latérales de la surface inférieure du profilé sans barres de renfort (3) simultanément avec le premier profilé avec une barre de renfort et le deuxième profilé avec une barre de renfort correspondants.

4. Procédé de soudage de profilé abouté selon la revendication 3, dans lequel
le soudage des deux parties latérales de la surface supérieure du profilé sans barres de renfort (3) simultanément avec le premier profilé avec une barre de renfort et le deuxième profilé avec une barre de renfort correspondants comprend spécifiquement :
en fonction de la séquence des profilés sans barres de renfort (3) disposés dans le profilé abouté, le soudage successif des deux parties latérales de la surface supérieure du profilé sans barres de renfort (3) simultanément avec le premier profilé avec une barre de renfort et le deuxième profilé avec une barre de renfort correspondants ; et
le soudage des deux parties latérales de la surface inférieure du profilé sans barres de renfort (3) simultanément avec le premier profilé avec une barre de renfort et le deuxième profilé avec une barre de renfort correspondants comprend spécifiquement :
en commençant à souder par l'extrémité éloignée du dernier profilé sans barres de renfort (3) soudé, le soudage successif des deux parties latérales de la surface inférieure du profilé sans barres de renfort (3) simultanément avec le premier profilé avec une barre de renfort et le deuxième profilé avec une barre de renfort correspondants.
